# EUROPÄISCHE PATENTSCHRIFT

(11) **EP 0 628 481 B1**
(45) Veröffentlichungstag und Bekanntmachung des Hinweises auf die Patenterteilung: **06.03.1996**
(21) Anmeldenummer: 94106194.7
(22) Anmeldetag: 21.04.1994
(51) Int. Cl.: B65B 69/00, B65G 53/42

(54) **Vorrichtung zum Entnehmen von pulverförmigen Stoffen aus Behältern**
Device for unloading powdery materials from containers
Dispositif pour l'évacuation de matériaux pulvérulents de récipients

(30) Priorität: 02.06.1993 DE 4318344
(43) Veröffentlichungstag der Anmeldung: 14.12.1994
(73) Patentinhaber: Degussa Aktiengesellschaft, D-60311 Frankfurt (DE)
(72) Erfinder: Schaffer, Roland, D-63589 Linsengericht-Eidengesäss (DE); Riemenschneider, Herbert, Dr., D-63571 Gelnhausen-Meerholz (DE)

(56) Entgegenhaltungen:
- EP-A- 0 033 832
- DE-A- 3 805 531
- DE-C- 419 531
- DE-U- 8 032 676
- DE-U- 8 231 899
- GB-A- 1 341 195
- US-A- 4 349 054
- US-A- 4 812 086

## Beschreibung

Die Erfindung betrifft eine Vorrichtung zum Entleeren von pulverförmigen Stoffen aus Behältern.

GB-A 1 341 195 (Canterbury) beschreibt eine Vorrichtung zum Entleeren von pulverförmigem oder granulatförmigem Material aus einem Behälter, bei welchem Preßluft auf der Leitung 4 über die Öffnung 7 in das größer dimensionierte Rohr 3 hineingeblasen wird. Durch diesen Luftstrom wird an der Öffnung 8 des Rohres 3 ein Unterdruck erzeugt, wodurch das Granulat bzw. das Pulver aus dem Behälter aufgenommen werden kann. So, wie die Vorrichtung in der Figur zeichnerisch dargestellt wird bzw. wie es auch in der Beschreibung zu der Zeichnung auf Seite 2, linke Spalte, Zeilen 35 bis 50 dargestellt wird, wird das Rohr 3 senkrecht über der Oberfläche des zu transportierenden Pulvers gehalten. Ein wesentliches Merkmal gemäß der Zeichnung ist, daß die Öffnung des Rohres 3 einen Querschnitt aufweist, der senkrecht zu der Längsachse des Rohres 3 ausgefertigt ist.

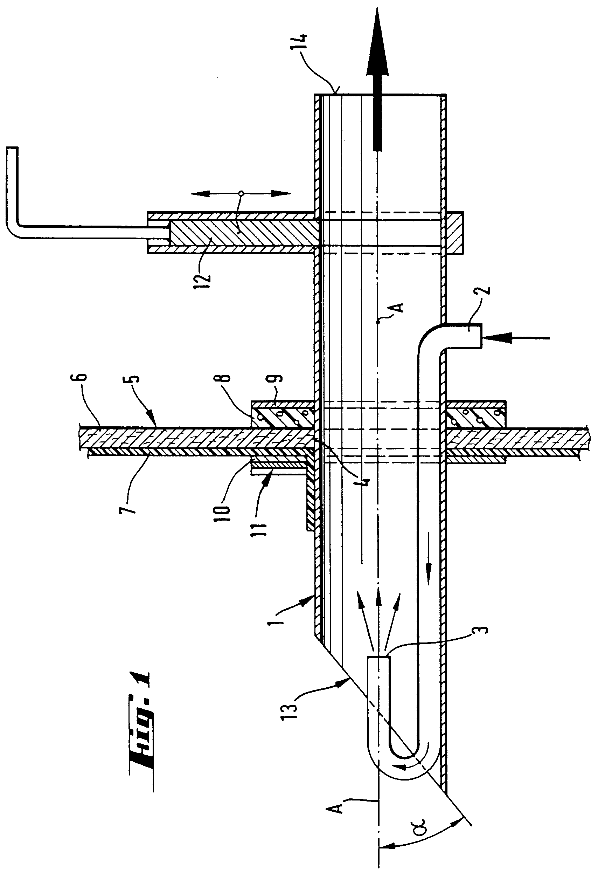

US-A 4 812 086 (Kopernicky) beschreibt eine Vorrichtung zum Einfüllen von Kunststoffgranulat in eine Extrudermaschine. Der Figur 1 kann entnommen werden, daß das Kunststoffgranulat aus dem Behälter 22 mittels eines zirkulierenden Luftstromes in den Vorratsbehälter 66 der Extrudermaschine transportiert wird. Dabei wird die Luft über die Zufuhrröhre 74 in das Granulat eingeführt, wobei das Granulat dann durch den Luftstrom in die abgeschrägte Öffnung des Rohres 78 hineingetragen wird. Zwischen dem Rohr 74, das die Luft zuführt, und dem Rohr 78, das das Gemisch aus Luft und Kunststoffgranulat in den Vorratsbehälter 66 transportiert, befindet sich die Lücke 64, die eine bestimmte Mindestgröße aufweisen muß. Deutlich ist gesagt, daß in dem Falle, in dem die Öffnung 58 der Röhre 74 in die Öffnung des Rohres 78 hineingeführt wird, ein Transport von Kunststoffgranulat aus dem Behälter 22 nicht mehr möglich ist.

Es ist bekannt, pulverförmige Stoffe, wie zum Beispiel synthetische Kieselsäuren, Ruße, Farbpigmente, Perborate, Percarbonate o. ä., in Einwegbehältern mit einem Rauminhalt von zwei Kubikmetern zu transportieren. Diese Behälter bestehen aus einer Faltkiste für die Seitenwände und zwei Stülpkisten als Boden und Deckel mit den Maßen 1170 mm x 960 mm x 1700 mm und sind auf eine passende Holzpalette gestellt. Der pulverförmige Stoff selbst wird durch einen Polyethyleneinstellsack im Innern des Kartons vor Feuchtigkeit geschützt. Der Polyethylensack wird durch eine einfache Drahtschlinge verschlossen. Der Zweikubikmeter-Behälter faßt zum Beispiel 100 kg pyrogen hergestellte Kieselsäure (Aerosil®).

Die Entleerung des Zweikubikmeter-Behälters erfolgt in bekannter Weise von oben, beispielsweise durch den Einsatz eines Saugrüssels (EP-A 0 033 832), wenn Aerosil® in dem Behälter transportiert wird. Die Entleerung von oben ist notwendig, weil hochdisperse Stoffe, wie zum Beispiel pyrogen hergestellte Kieselsäure Aerosil^{R}, Brücken bilden und nicht nachfließen. Der Behälter selbst wird einer anderen Verwendung zugeführt.

Aufgrund der neu erlassenen Verpackungsverordnung besteht die Auflage, den Zweikubikmeter-Behälter zurückzunehmen und für denselben pulverförmigen Stoff wiederzuverwenden. Der Einsatz als Mehrwegbehälter bedingt jedoch eine Entleerung über eine am Boden oder in Bodennähe angebrachte Öffnung. Eine Entleerung mittels des aus dem Dokument EP-A 0 033 832 bekannten Saugrüssels ist dann nicht mehr möglich, weil pulverförmige Stoffe, wie zum Beispiel pyrogen hergestellte Kieselsäure (Aerosil®), ein schlechtes Fließverhalten aufweisen.

Es besteht somit die Notwendigkeit, eine Vorrichtung zum Entleeren von pulverförmigen Stoffen zu entwickeln, mit der eine Entleerung aus Behältern am Boden bzw. in Bodennähe möglich ist.

Gegenstand der Erfindung ist eine Vorrichtung zum Entleeren von Behältern, welche pulverförmige Stoffe enthalten, durch eine im Bodenbereich einer Seitenwand angeordnete Öffnung, bei welcher Vorrichtung ein Luftzufuhrrohr im Abstand vom Ende eines Rohres (1) zum Absaugen des pulverförmigen Stoffes durch dessen Wand eintritt, wobei in dem Rohr das Luftzufuhrrohr derart angeordnet ist, daß seine Luftaustrittsöffnung koaxial zu dem Rohr in Richtung des Rohrinnern des Rohres liegt, wobei die der Luftaustrittsöffnung am nächsten liegende Öffnung des Rohres einen Rand aufweist, dessen durch den Rand umschlossene Ebene mit der Achse des Rohres einen Winkel von kleiner 90° bildet, wobei die offene Seite und oben gerichtet ist.

In einer Ausführungsform der Erfindung kann die Luftaustrittsöffnung innerhalb einer Querschnittsverengung des Rohres angeordnet sein.

Mit der erfindungsgemäßen Vorrichtung können vor allem pulverförmige Stoffe mit einem niedrigen Schüttgewicht, wie zum Beispiel synthetisch hergestellte Kieselsäuren, Ruße, Farbpigmente, Perborate, Percarbonate o. ä. Stoffe aus Behältern entleert werden. Insbesondere eignet sich die erfindungsgemäße Vorrichtung zum Entleeren von pyrogen hergestellter Kieselsäure (Aerosil®).

Die erfindungsgemäße Vorrichtung wird anhand der Zeichnung näher erläutert und beschrieben:

Gemäß Figur 1 besteht die erfindungsgemäße Vorrichtung aus dem Rohr 1, in dem der Luftanschluß 2 derart angeordnet ist, daß die Austrittsöffnung 3 des Luftanschlusses 2 koaxial zu dem Rohr 1 in die Richtung des Rohrinneren des Rohres 1 liegt. Das Rohr 1 ist in Öffnung 4 der Wand des Behälters 5, die aus dem Karton 6 und dem Polyethylen 7 besteht, geschoben. Um eine Staubbelästigung zu vermeiden, ist das Rohr 1 außerhalb des Behälters mit einer Schaumgummimanchette versehen. Das Rohr 1 kann mit dem Schieber 12 geschlossen werden, sodaß keine Förderung mehr erfolgt. Über den Luftanschluß 2 wird Preßluft, die an der Austrittsöffnung in das Innere des Rohres 1 geleitet wird, zugeführt. Das Rohr 1 ist an dem Ende 13 in einem Winkel von 45 ° abgeschrägt, das heißt, die durch den Rand des Endes 13 umgeschlossene Ebene bildet mit der Achse des Rohres 1 einen Winkel von 45 °. Die schräge, offene Seite ist nach oben gerichtet. Der pulverförmige Stoff, zum Beispiel pyrogen hergestellte Kieselsäure (Aerosil®), der durch die Schwerkraft in Richtung Öffnung 13 rutscht, wird durch den Preßluftstrom unter die schräge Öffnung 13 in das Innere des Rohres 1 und darüberhinaus durch das Ende 14 in den vorgesehenen Auffangbehälter transportiert. Die Schaumgummimanchette 8 wird durch den Ring 9, der auf dem Mantel des Rohres 1 befestigt ist, an die Behälterwand 5 gepreßt. Gleichzeitig wird das Rohr 1 mit einem zweiten Ring 10 von innen an der Behälterwand 5 festgehalten. Der Ring 10 ist an der Stelle 11 geöffnet, wobei die Enden seitlich verschoben sind. Dadurch kann der Ring 10 als Bajonettverschluß wirken.

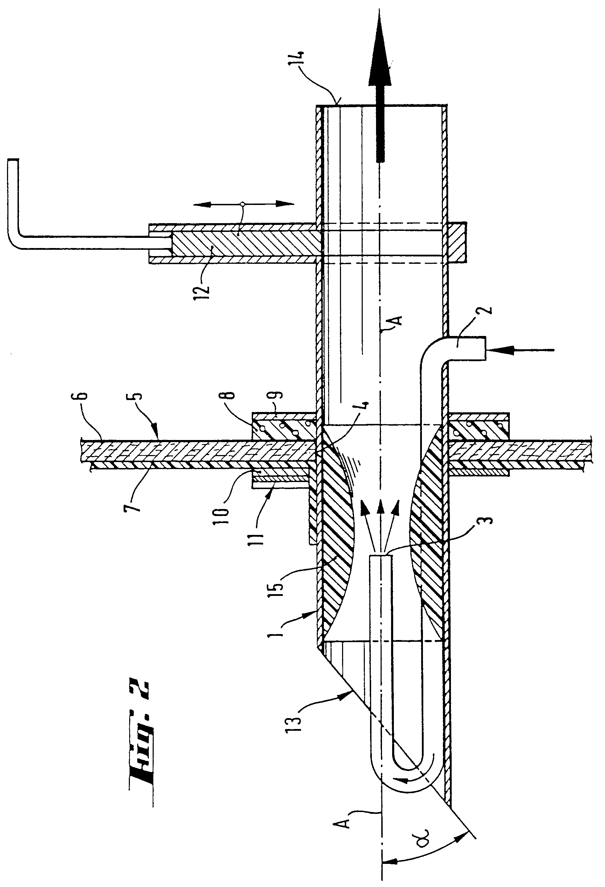

Gemäß Figur 2 ist der Strömungsquerschnitt des Rohres 1 mittels des Polypropyleneinsatzes 2 in Form einer Venturidüse verengt. Hierdurch kann die Strömungsgeschwindigkeit und damit die Fördergeschwindigkeit erhöht werden.

## Patentansprüche

1. Vorrichtung zum Entleeren von Behältern, welche pulverförmige Stoffe enthalten, durch eine im Bodenbereich einer Seitenwand (5) angeordnete Öffnung (4), bei welcher Vorrichtung ein Luftzufuhrrohr (2) im Abstand vom Ende eines Rohres (1) zum Absaugen des pulverförmigen Stoffes durch dessen Wand eintritt und in dem Rohr (1) das Luftzufuhrrohr (2) derart angeordnet ist, daß seine Luftaustrittsöffnung (3) koaxial zu dem Rohr (1) in Richtung des Rohrinneren liegt, wobei die der Luftaustrittsöffnung (3) am nächsten liegende Öffnung (13) des Rohres (1) einen Rand aufweist, dessen durch den Rand umschlossene Ebene mit der Achse des Rohres (1) einen Winkel von kleiner 90° bildet, wobei die offene Seite und oben gerichtet ist.

2. Vorrichtung nach Anspruch 1, dadurch gekennzeichnet, daß die Luftaustrittsöffnung (3) innerhalb einer Querschnittsverengung des Rohres (1) angeordnet ist.

## Claims

1. Device for the emptying of containers which contain powdery materials, through an orifice (4) located in the base region of a lateral wall (5), in which device an air inlet pipe (2) enters at a distance from the end of a pipe (1) through the wall of the latter for the purpose of withdrawing the powdery material by suction, and the air inlet pipe (2) is arranged in the pipe (1) in such a way that its air outlet (3) is coaxial with the pipe (1) in the direction of the interior of the pipe, with the opening (13) of the pipe, which is adjacent to the air outlet (3), having an edge, whereof the plane surface encompassed by the edge forms an angle of less than 90° with the axis of the pipe (1), with the open side pointing upwards.

2. Device according to claim 1, characterised in that the air outlet (3) is arranged within a cross-sectional constriction of the pipe (1).

## Revendications

1. Dispositif pour vider des récipients qui contiennent des substances pulvérulentes à travers une ouverture (4) située dans le bas d'une paroi latérale (5), un tuyau d'alimentation d'air (2) pénétrant dans un tuyau (1), destiné à aspirer la substance pulvérulente, en traversant sa paroi à une certaine distance de son extrémité et le tuyau d'alimentation d'air (2) étant disposé dans le tuyau (1) de telle manière que son ouverture (3) de sortie de l'air est coaxiale par rapport au tuyau (1) vers l'intérieur du tuyau, l'ouverture (13) du tuyau (1) à proximité de l'ouverture (3) de sortie de l'air présentant un bord dont le plan dans lequel il est situé forme un angle inférieur à 90° avec l'axe du tuyau (1), le côté ouvert étant dirigé vers le haut.

2. Dispositif selon la revendication 1, caractérisé en ce que l'ouverture (3) de sortie de l'air est disposée dans un rétrécissement de la section du tuyau (1).
